# FASCICULE DE BREVET EUROPEEN

(11) **EP 4 396 936 B1**
(45) Date de publication et mention de la délivrance du brevet: **08.10.2025**
(21) Numéro de dépôt: 22773112.2
(22) Date de dépôt: 23.08.2022
(51) Int. Cl.: H02S 50/10

(54) **DISPOSITIF ET PROCÉDÉ DE MESURE DE PRODUCTION ÉNERGÉTIQUE PHOTOVOLTAÏQUE**
VORRICHTUNG UND VERFAHREN ZUR MESSUNG DER FOTOVOLTAISCHEN ENERGIEERZEUGUNG
DEVICE AND METHOD FOR MEASURING PHOTOVOLTAIC ENERGY PRODUCTION

(30) Priorité: 30.08.2021 FR 2109011
(43) Date de publication de la demande: 10.07.2024
(73) Titulaire: Commissariat à l'Energie Atomique et aux Energies Alternatives, 75015 Paris (FR)
(72) Inventeur: PILAT, Eric, 38054 Grenoble Cedex 09 (FR); COLIN, Hervé, 38054 Grenoble Cedex 09 (FR)
(74) Mandataire: Hautier IP
(86) Numéro de dépôt international: PCT/EP2022/073493
(87) Numéro de publication internationale: WO 2023/030968

(56) Documents cités:
- CN-U- 207 530 778
- US-B1- 11 063 556

## Description

### DOMAINE TECHNIQUE DE L'INVENTION

La présente invention concerne la mesure de production énergétique photovoltaïque, en particulier la production énergétique à partir de modules à cellules photovoltaïques.

### ÉTAT DE LA TECHNIQUE

Actuellement, il existe différents modules photovoltaïques pour produire de l'énergie électrique en convertissant une partie du rayonnement solaire grâce à des cellules photovoltaïques. Les modules photovoltaïques peuvent être mono-faciaux ou bifaciaux. De façon générale, un module mono-facial comporte une seule face active alors que les modules bifaciaux comportent une face avant active et une face arrière active. On entend par face active, une face réceptrice du rayonnement solaire à destination des cellules photovoltaïques. Ces modules photovoltaïques subissent un encrassement de leurs faces actives plus ou moins important en fonction de différents paramètres, en particulier leur localisation géographique et leur mode d'implantation, notamment leur inclinaison. Cet encrassement affecte l'efficacité des modules, ce qui impacte directement la production énergétique. Le document CN207530778A décrit un procédé de mesure de énergie pour une installation photovoltaïque .

Certains systèmes utilisent un capteur de température afin de détecter un ombrage partiel du module photovoltaïque. Mais cette mesure n'est pas suffisamment précise pour déterminer l'état de propreté des modules.

On peut citer la demande de brevet allemand DE102019001566, qui divulgue un module solaire équipé de capteurs capables de déterminer un degré de salissure de la surface. Mais il faut utiliser plusieurs capteurs par module, ce qui devient complexe lorsqu'on souhaite contrôler la production énergétique d'une centrale photovoltaïque équipée de nombreux modules.

On peut citer, également, des équipements de mesure de salissures qui consistent à comparer la production de courant entre un module encrassé et un module similaire propre. Par exemple, un dispositif consiste à exposer deux modules photovoltaïques similaires sur un même châssis. L'un des deux modules est nettoyé périodiquement pendant que l'autre va progressivement s'encrasser. Un dispositif électronique mesure un courant qui est directement proportionnel aux photons impactant les cellules. Par ailleurs, un ratio entre les deux courants mesurés permet de quantifier le taux de salissures. Un autre exemple consiste à disposer deux modules photovoltaïques mono-faciaux similaires sur un même châssis et à protéger l'un des deux modules par un couvercle qui s'ouvre juste le temps de réaliser les mesures de courant nécessaires. Mais ces équipements de mesure ne sont pas adaptés pour mesurer l'impact des salissures sur les faces arrière des modules bifaciaux.

On peut, en outre, citer la demande de brevet chinois CN 109 546 955 qui divulgue une méthode de mesure utilisant une cellule photovoltaïque bifaciale et un dispositif de mesure des données électriques fournies par la cellule. Mais le dispositif de mesure ne permet pas de distinguer le courant fourni par la face arrière de la cellule avec le courant fourni par la face avant de la cellule. Ce dispositif de mesure ne permet pas de mesurer précisément l'impact des salissures sur la face arrière d'un module photovoltaïque bifacial.

### RÉSUMÉ DE L'INVENTION

Un objet de l'invention consiste à pallier ces inconvénients, et plus particulièrement à fournir des moyens de mesure de production énergétique fournie par les faces arrière de modules photovoltaïques bifaciaux.

Un autre objet de l'invention consiste à fournir des moyens de mesure simples utilisant le moins de capteurs de mesure possible.

Les autres objets, caractéristiques et avantages de la présente invention apparaîtront à l'examen de la description suivante et des dessins d'accompagnement.

Selon un aspect de l'invention, il est proposé un dispositif de mesure de production énergétique, comprenant des première et deuxième unités, chaque unité comprenant au moins un module photovoltaïque bifacial, chaque module photovoltaïque bifacial ayant une face avant et une face arrière, le dispositif de mesure comprenant un système de mesure des courants fournis par les modules photovoltaïques bifaciaux.

Chaque unité comporte deux écrans associés respectivement à la face avant et à la face arrière dudit au moins un module photovoltaïque bifacial de l'unité, chaque écran étant mobile entre une position déployée où l'écran masque sa face associée et une position rétractée où sa face associée est exposée à un rayonnement solaire.

Ainsi, on peut mesurer une différence de courant entre un module photovoltaïque bifacial qui a été exposé aux salissures et un module photovoltaïque bifacial qui a été protégé. On peut ainsi estimer un taux de salissures qui a impacté la production énergétique. Le dispositif de mesure permet, en outre, de mesurer de manière indépendante un taux d'encrassement des faces avant et des faces arrière.

Selon un autre aspect de l'invention, il est proposé une centrale photovoltaïque comprenant une pluralité d'unités de production, chaque unité de production comprenant au moins un module photovoltaïque bifacial, dit de production, destiné à produire de l'électricité, la centrale photovoltaïque comprenant au moins un dispositif de mesure tel que défini ci-avant.

Selon encore un autre aspect, il est proposé un procédé de mesure de production énergétique photovoltaïque utilisant un dispositif de mesure tel que défini ci-avant.

Le procédé de mesure comporte une étape initiale dans laquelle on déploie les deux écrans de la première unité du dispositif de mesure, et on rétracte les deux écrans de la deuxième unité du dispositif de mesure.

Selon encore un autre aspect, il est proposé un produit programme d'ordinateur comprenant des instructions qui, lorsqu'elles sont exécutées par une unité de commande électronique, permettent à l'unité de commande électronique d'effectuer les étapes du procédé de mesure tel que défini ci-avant.

### BRÈVE DESCRIPTION DES FIGURES

D'autres avantages et caractéristiques ressortiront plus clairement de la description qui va suivre de modes de réalisation et de mise en œuvre de l'invention donnés à titre d'exemples non limitatifs et représentés aux dessins annexés, dans lesquels :
La figure 1, illustre schématiquement une vue en perspective d'un mode de réalisation d'un dispositif de mesure ;
La figure 2, illustre schématiquement une vue en perspective d'un autre mode de réalisation de l'invention ;
La figure 3, illustre schématiquement une vue en coupe d'un mode de réalisation d'un dispositif de mesure dans laquelle un réflecteur est dans la position rétractée ;
La figure 4, illustre schématiquement une vue en coupe du dispositif de mesure illustré à la figure 3, dans laquelle le réflecteur est dans la position déployée ;
La figure 5, illustre schématiquement une vue de face d'un mode de réalisation d'une unité du dispositif de mesure dans laquelle un écran est dans la position rétractée ;
La figure 6, illustre schématiquement une vue en coupe de l'unité illustrée à la figure 5 ;
La figure 7, illustre schématiquement une vue de face de l'unité illustrée à la figure 5, dans laquelle les écrans sont en cours de déploiement ;
La figure 8, illustre schématiquement une vue en coupe de l'unité illustrée à la figure 7 ;
La figure 9, illustre schématiquement une vue en coupe d'un mode de réalisation d'une unité du dispositif de mesure ;
La figure 10, illustre schématiquement une vue de dessus d'un autre mode de réalisation d'une unité du dispositif de mesure ;
La figure 11, illustre schématiquement une vue en coupe de l'unité illustrée à la figure 10, dans laquelle un écran est dans la position rétractée ;
La figure 12, illustre schématiquement une vue en coupe de l'unité illustrée à la figure 10, dans laquelle l'écran est en cours de déploiement ;
La figure 13, illustre schématiquement une vue en coupe de l'unité illustrée à la figure 10, dans laquelle l'écran est dans la position déployée ;
La figure 14, illustre schématiquement une vue de dessus d'un autre mode de réalisation d'une unité du dispositif de mesure, dans laquelle un écran est dans la position rétractée ;
La figure 15, illustre schématiquement une vue de dessus de l'unité illustrée à la figure 14, dans laquelle l'écran est en cours de déploiement ;
La figure 16, illustre schématiquement une vue de dessus d'un mode de réalisation d'un réflecteur du dispositif de mesure ;
Les figures 17 à 23, illustrent de façon schématique différentes vues des principales étapes d'un procédé de mesure.

### DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement.

Selon un exemple,
- Le dispositif de mesure peut comprendre au moins un réflecteur associé à au moins une face arrière, ledit au moins un réflecteur étant mobile entre une position déployée où ledit au moins un réflecteur réfléchit un rayonnement solaire vers ladite au moins une face arrière à laquelle il est associé et masque une partie du sol, et une position rétractée où la partie du sol est exposée au rayonnement solaire.
- Le dispositif de mesure peut comprendre deux réflecteurs associés respectivement à la face arrière dudit au moins un module photovoltaïque bifacial de la première unité et à la face arrière dudit au moins un module photovoltaïque bifacial de la deuxième unité.
- Au moins un écran peut être configuré pour être animé en rotation autour d'un axe parallèle à sa face associée de sorte à translater en regard de sa face associée pour sélectivement passer de sa position déployée à sa position rétractée.
- Au moins un écran peut être configuré pour être animé en translation le long de sa face associée pour sélectivement passer de sa position déployée à sa position rétractée.
- Au moins un écran comprend des lames articulées configurées pour être placées en regard les unes aux autres dans sa position rétractée.
- Avantageusement, au moins une unité comprend des rails de guidage configurés pour guider ledit au moins un écran lors de sa translation.
- Au moins un écran peut être configuré pour être animé en rotation autour d'un axe perpendiculaire à sa face associée pour sélectivement passer de sa position déployée à sa position rétractée.
- Au moins un module photovoltaïque bifacial peut comporter un ensemble multicouches muni d'une couche de cellules photovoltaïques bifaciales.
- L'ensemble multicouches peut en outre comporter une première couche de protection transparente au rayonnement solaire et formant la face avant dudit au moins un module photovoltaïque bifacial et une deuxième couche de protection transparente au rayonnement solaire et formant la face arrière dudit au moins un module photovoltaïque bifacial.
- Au moins un module photovoltaïque bifacial peut comporter des premier et deuxième ensembles multicouches munis, chacun, d'une couche de cellules photovoltaïques mono-faciales.
- Le premier ensemble multicouches peut comporter une première couche de protection transparente au rayonnement solaire et formant la face avant dudit au moins un module photovoltaïque bifacial et une deuxième couche de protection opaque au rayonnement solaire, et le deuxième ensemble multicouches peut comporter une première couche de protection transparente au rayonnement solaire et formant la face arrière dudit au moins un module photovoltaïque bifacial et une deuxième couche de protection opaque au rayonnement solaire.
- Les unités de production peuvent être dépourvues d'écrans de protection contre les salissures.
- Les modules photovoltaïques bifaciaux de production peuvent présenter des caractéristiques identiques, notamment en termes de taille de nombre de cellules photovoltaïques, à celles des modules photovoltaïques bifaciaux du dispositif de mesure.
- Le procédé de mesure peut comprendre, après l'étape initiale, une mesure principale de production énergétique, dans laquelle on rétracte l'écran associé à la face avant dudit au moins un module photovoltaïque bifacial de la première unité du dispositif de mesure, on déploie l'écran associé à la face arrière dudit au moins un module photovoltaïque bifacial de la deuxième unité du dispositif de mesure, et on mesure les courants fournis par les modules photovoltaïques bifaciaux.
- Le procédé peut également comprendre, après l'étape de mesure principale, une mesure secondaire de production énergétique, dans laquelle on rétracte les écrans associés aux faces arrière, on déploie les écrans associés aux faces avant, et on mesure les courants fournis par les modules photovoltaïques bifaciaux.
- L'étape initiale peut comporter une sous-étape dans laquelle on rétracte ledit au moins un réflecteur.
- Le procédé peut en outre comprendre, après l'étape de mesure principale, une mesure supplémentaire de production énergétique, dans laquelle on rétracte les écrans associés aux faces arrière, on déploie les écrans associés aux faces avant, on déploie ledit au moins un réflecteur et on mesure les courants fournis par les modules photovoltaïques bifaciaux.
- Le procédé peut comprendre, après l'étape initiale, une mesure additionnelle de production énergétique, dans laquelle on rétracte l'écran associé à la face arrière dudit au moins un module photovoltaïque bifacial de la première unité du dispositif de mesure, on mesure un premier courant fourni par ledit au moins un module photovoltaïque bifacial de la première unité du dispositif de mesure, on déploie ledit au moins un réflecteur, et on mesure un deuxième courant fourni par ledit au moins un module photovoltaïque bifacial de la première unité du dispositif de mesure.

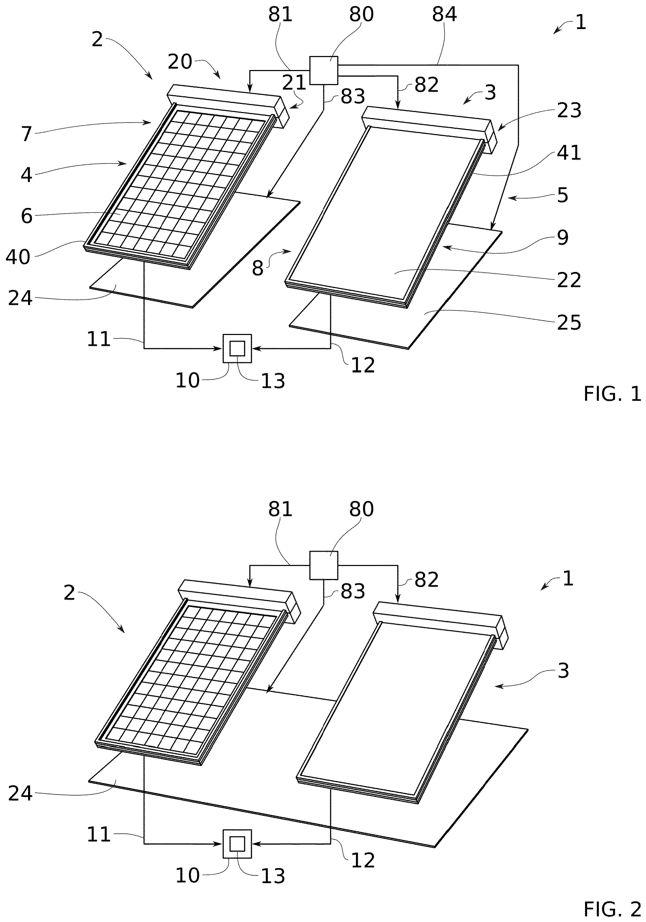

Sur les figures 1 à 4, on a représenté un mode de réalisation d'un dispositif 1 de mesure de production énergétique. Le dispositif 1 est destiné à estimer une qualité de production énergétique fournie par une centrale solaire, en particulier une centrale équipée de modules photovoltaïques bifaciaux. Plus particulièrement, le dispositif 1 de mesure est destiné à mesurer l'impact des salissures sur la production énergétique de la centrale. Le dispositif 1 est en outre adapté pour estimer un taux de salissures des modules de la centrale destinés à produire de l'énergie. Ces modules destinés à produire l'énergie sont qualifiés de modules photovoltaïques de production.

De manière générale, le dispositif 1 comprend des première et deuxième unités 2, 3. Chaque unité 2, 3 comprend au moins un module photovoltaïque bifacial 4, 5. Chaque module photovoltaïque bifacial 4, 5 comporte une face avant 6, 8 et une face arrière 7, 9. Les faces 6 à 9 sont dites actives, car elles sont destinées à recevoir un rayonnement solaire 14, 15 qui atteint des cellules photovoltaïques. Plus particulièrement, chaque module photovoltaïque bifacial 4, 5 comporte une ou plusieurs cellules photovoltaïques pour convertir une partie du rayonnement solaire 14,15 en énergie électrique. Les cellules photovoltaïques peuvent être mono-faciales ou bifaciales. Une cellule mono-faciale est conçue pour absorber le rayonnement solaire par sa face avant, alors qu'une cellule bifaciale est conçue pour absorber le rayonnement solaire par ses faces avant et arrière. Ainsi, pour un module photovoltaïque bifacial, ses faces avant et arrière transmettent le rayonnement solaire 14, 15 vers la ou les cellules photovoltaïques. De préférence les modules photovoltaïques bifaciaux 4, 5 comprennent, chacun, plusieurs cellules photovoltaïques bifaciales. Plus particulièrement, un module photovoltaïque bifacial 4, 5 peut être formé, soit par un ensemble multicouches muni d'une couche de cellules photovoltaïques bifaciales, soit par deux ensembles multicouches munis, chacun, d'une couche de cellules photovoltaïques mono-faciales. En outre, les cellules photovoltaïques bifaciales ont leurs faces avant positionnées en regard de la face avant 6, 8 du module 4, 5 et leurs faces arrières positionnées en regard de la face arrière 6, 8 du module 4, 5. Par ailleurs, les cellules photovoltaïques mono-faciales ont leurs faces avant positionnées en regard de la face avant 6, 8 du module 4, 5. Par exemple, dans le cas d'un module 4, 5 à cellules photovoltaïques bifaciales, l'ensemble multicouches peut comprendre une première couche de protection transparente au rayonnement solaire 14, 15 formant la face avant du module 4, 5, puis la couche de cellules photovoltaïques bifaciales et une deuxième couche de protection transparente au rayonnement solaire 14, 15 formant la face arrière du module 4, 5.

Avantageusement, la couche de cellules photovoltaïques bifaciales peut également comprendre un matériau de protection enrobant les cellules. Dans le cas d'un module 4, 5 à cellules photovoltaïques mono-faciales, un premier ensemble multicouches peut comprendre une première couche de protection transparente au rayonnement solaire 14, 15 formant la face avant du module 4, 5, puis une couche de cellules photovoltaïques mono-faciales et une deuxième couche de protection opaque au rayonnement solaire 14, 15. Le deuxième ensemble multicouches peut comprendre une première couche de protection transparente au rayonnement solaire 14, 15 formant la face avant du module 4, 5, puis une couche de cellules photovoltaïques mono-faciales et une deuxième couche de protection opaque au rayonnement solaire 14, 15. Avantageusement, chaque couche de cellules photovoltaïques bifaciales peut également comprendre un matériau de protection enrobant les cellules. Dans le cas d'un module 4, 5 à cellules photovoltaïques mono-faciales, les deux ensembles multicouches sont placés dos-à-dos, on dit également que chaque ensemble multicouches forme un sous-module photovoltaïque mono-facial. En d'autres termes, les deuxièmes couches de protection opaques au rayonnement solaire 14, 15 sont placées en regard l'une vers l'autre.

Par ailleurs, le dispositif 1 comprend un système de mesure 10 configuré pour mesurer des courants fournis par les modules photovoltaïques bifaciaux 4, 5. Plus particulièrement, chaque module photovoltaïque bifacial 4, 5 produit un courant électrique proportionnel au rayonnement solaire 14, 15 reçu sur chacune de ses faces avant et arrière 6 à 9. En d'autres termes, les courants fournis sont proportionnels aux photons impactant les cellules photovoltaïques. Le système de mesure 10 est couplé aux unités 2, 3 respectivement par deux connexions 11, 12 pour transmettre les courants fournis par les modules photovoltaïques bifaciaux 4, 5 au système de mesure 10. Avantageusement, le système de mesure 10 comporte un comparateur 13 configuré pour comparer le courant fourni par le module photovoltaïque bifacial 4 de la première unité 2 avec le courant fourni par le module photovoltaïque bifacial 5 de la deuxième unité 3. La comparaison peut comprendre un calcul d'un ratio entre les deux courants mesurés. La comparaison permet, notamment, d'estimer le taux de salissures du module photovoltaïque bifacial 5 de la deuxième unité 3.

Avantageusement, les modules photovoltaïques bifaciaux 4, 5 peuvent être similaires aux modules photovoltaïques bifaciaux de production de la centrale. Par exemple, les modules photovoltaïques bifaciaux 4, 5 peuvent avoir des dimensions identiques à celles des modules photovoltaïques bifaciaux de production de la centrale, ou avoir un même nombre de cellules photovoltaïques que ceux de la centrale. Avantageusement, les modules photovoltaïques bifaciaux 4, 5 peuvent avoir le même type de cellules, mono-faciales ou bifaciales, et/ou les mêmes ensembles multicouches que ceux de la centrale. En outre, les modules 4, 5 du dispositif de mesure 1 peuvent avoir une disposition similaire, en inclinaison et hauteur par rapport au sol, que ceux de la centrale. Par exemple, le module photovoltaïque bifacial 5 de la deuxième unité 3 est similaire à celui de la première unité 4, c'est-à-dire que les dimensions des modules photovoltaïques bifaciaux 4, 5 des unités 2, 3 peuvent être identiques. Selon un autre avantage, les modules photovoltaïques bifaciaux 4, 5 des première et deuxième unités 2, 3 comportent un même nombre de cellules photovoltaïques. Selon des modes de réalisation alternatifs, le module photovoltaïque bifacial 5 de la deuxième unité 3 diffère de celui de la première unité 4, par exemple en termes de taille et/ou en termes de nombre de cellules photovoltaïques. En variante, un module photovoltaïque bifacial 4, 5 peut comprendre des cellules photovoltaïques bifaciales et l'autre module 4, 5 des cellules photovoltaïques mono-faciales. De préférence le module photovoltaïque bifacial 5 de la deuxième unité 3 est identique à celui de la première unité 4, en dimension, en nombre et type de cellules et en configuration de leurs ensembles multicouches.

De préférence, les modules photovoltaïques bifaciaux 4, 5 du dispositif de mesure sont identiques, notamment en termes de taille, de nombre, de type de cellules photovoltaïques, et de configuration des ensembles multicouches, aux modules photovoltaïques bifaciaux de production, c'est-à-dire les modules photovoltaïques destinés à produire de l'énergie. Cela permet d'obtenir à partir du dispositif de mesure, une estimation plus fiable de l'impact des salissures sur l'énergie produite par les modules photovoltaïques bifaciaux de production.

En particulier, les modules photovoltaïques bifaciaux de production sont distincts des modules photovoltaïques bifaciaux 4, 5 du dispositif de mesure.

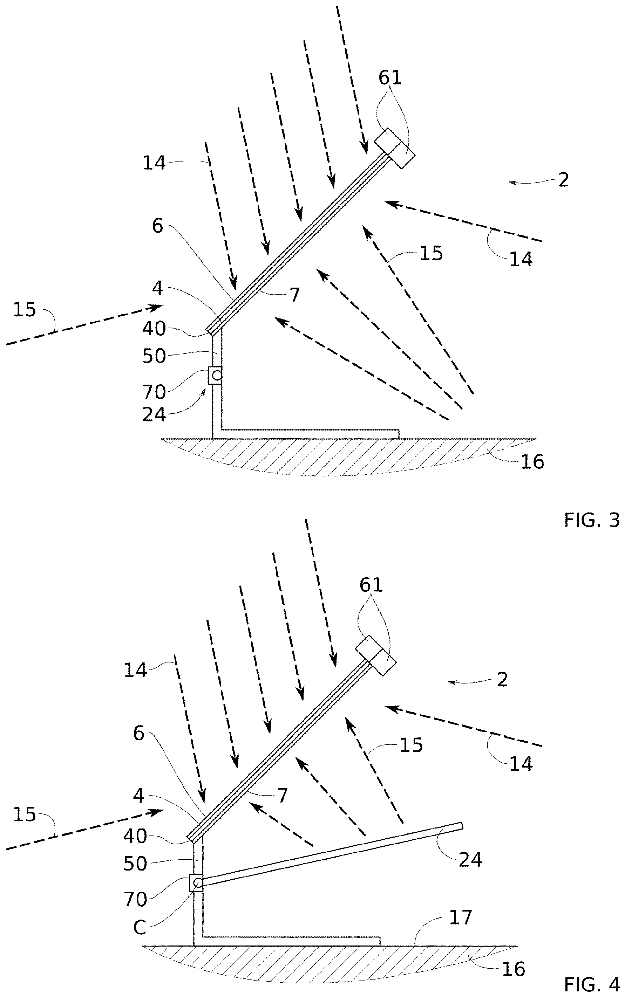

Sur la figure 3, on a représenté un mode de fonctionnement d'un module photovoltaïque bifacial 4 de la première unité 2, le fonctionnement du module photovoltaïque 5 de la deuxième unité 3 étant identique. La face avant 6 reçoit principalement un rayonnement solaire 14 de manière directe, et un rayonnement solaire 15 réfléchi par le sol 16, tandis que la face arrière 7 reçoit principalement un rayonnement solaire 15 réfléchi par le sol 16 et une partie du rayonnement solaire 14, notamment un rayonnement solaire 14 réfléchi par les nuages et éventuellement par des objets placés à l'arrière de cette face 7, par exemple des modules photovoltaïques bifaciaux de production situés sur une autre rangée.

En particulier, chaque unité 2, 3 comporte au moins deux écrans 20 à 23 associés respectivement à la face avant 6, 8 et à la face arrière 7, 9 du ou des modules photovoltaïques bifaciaux 4, 5 de l'unité 2, 3. De préférence, chaque unité 2, 3 comporte deux écrans 20 à 23 pour limiter le nombre de mécanismes de mise en mouvement des écrans 20 à 23. Lorsqu'une unité 2, 3 comprend un unique module photovoltaïque bifacial 4, 5, l'unité 2, 3 comprend un écran 20, 22, dit avant, associé à la face avant 6, 8 du module 4, 5 et un écran 21, 23, dit arrière, associé à la face arrière 7, 9 du module 4, 5. En variante, une unité 2, 3 peut comprendre plusieurs modules photovoltaïques bifaciaux 4, 5, et dans ce cas, l'unité 2, 3 peut comprendre un écran 20, 22, dit avant, associé aux faces avant 6, 8 de ses modules 4, 5 et un écran 21, 23, dit arrière, associé aux faces arrière 7, 9 de ses modules 4, 5 . Selon encore une autre variante, une unité 2, 3 peut comprendre plusieurs écrans avant associés respectivement aux faces avant de ses modules et plusieurs écrans arrière associés respectivement aux faces arrière de ses modules. Les écrans 20 à 23 sont des écrans de protection contre les salissures. Les écrans 20 à 23 peuvent être, en partie ou entièrement, opaques, transparents ou translucides au rayonnement solaire 14, 15. Plus particulièrement, chaque écran 20 à 23 est mobile entre une position déployée dans laquelle l'écran 20 à 23 masque la face 6 à 9 à laquelle il est associé, et une position rétractée dans laquelle la face 6 à 9, à laquelle il est associé, est exposée au rayonnement solaire 14, 15. On entend par masquer, le fait de couvrir une surface à au moins 80 %, de préférence à 100%. Par ailleurs, on entend par exposer, le fait de recevoir un rayonnement solaire à au moins 80 %, de préférence à 100%.Avantageusement, pour chaque module photovoltaïque bifacial 4, 5, l'écran associé à la face avant peut-être déployé et rétracté indépendamment de l'écran associé à la face arrière.

Sur les figures 1 et 2, on a illustré un exemple dans lequel les écrans 20,21 de la première unité 2 sont dans la position rétractée, l'écran 23 associé à la face arrière 9 du module photovoltaïque 5 de la deuxième unité 3 est également dans la position rétractée, et l'écran 22 associé à la face avant 8 du module photovoltaïque 5 de la deuxième unité 3 et dans la position déployée.

Chaque unité 2, 3 peut comprendre un châssis 40, 41, communément appelé panneau. Les modules photovoltaïques 4, 5 sont respectivement montés sur les châssis 40,41 des première et deuxième unités 2, 3. Chaque unité 2, 3 peut en outre comprendre un support 50 relié au châssis 40, 41 de l'unité 2, 3 de manière à poser les unités 2, 3 sur le sol 16. En particulier, les écrans 20 à 23 sont montés mobiles sur les châssis 40,41 des unités 2, 3.

Par ailleurs, le dispositif de mesure 1 peut comprendre au moins un réflecteur 24, 25 associé à au moins une face arrière 7, 9 des modules photovoltaïques 4, 5. Par exemple, le dispositif 1 comprend un unique réflecteur 24 associé aux faces arrière 7, 9 des modules photovoltaïques 4, 5 des deux unités 2, 3, comme illustré sur la figure 2. De préférence, le dispositif 1 comprend deux réflecteurs 24, 25 associés respectivement aux deux faces arrière 7, 9 des modules photovoltaïques 4, 5 des deux unités 2, 3, comme illustré sur la figure 1. Chaque réflecteur 24, 25 a pour rôle de réfléchir le rayonnement solaire 14 qu'il reçoit. Chaque réflecteur 24, 25 a donc une surface ayant un pouvoir réfléchissant, appelé albédo, c'est-à-dire un rapport entre l'énergie lumineuse réfléchie et l'énergie lumineuse incidente. Les réflecteurs 24,25 ont pour rôle d'assurer une réflexion homogène sur les faces arrière 7, 9 des modules photovoltaïques 4, 5

Chaque réflecteur 24, 25 est configuré pour sélectivement passer depuis une position déployée dans laquelle le réflecteur 24, 25 réfléchit un rayonnement solaire 15 en direction d'une face arrière 7, 9 à laquelle il est associé et masque une partie 17 du sol 16, jusqu'à une position rétractée où la partie 17 du sol 16 est exposée au rayonnement solaire 14. En d'autres termes, chaque réflecteur 24, 25 est monté mobile par rapport au sol 16. Par exemple les réflecteurs 24, 25 peuvent être montés mobiles sur les supports 50 des unités 2, 3. En variante, les réflecteurs 24, 25 sont montés mobiles sur un boîtier 70 posé sur le sol 16.

Selon un mode de réalisation avantageux, le sol est recouvert d'un revêtement réfléchissant. La présence d'un revêtement permet d'augmenter le rayonnement lumineux 15 réfléchi par le sol en direction des faces arrière des modules photovoltaïques bifaciaux de production de la centrale. Cela permet d'augmenter la production d'énergie électrique à partir des faces arrière des modules photovoltaïques bifaciaux de production. Ainsi, on peut également disposer un revêtement réfléchissant équivalent, aux revêtements utilisés pour les modules photovoltaïques bifaciaux de production de la centrale, sur le sol situé en arrière des unités 2, 3 du dispositif 1 de mesure. Dans ce cas, chaque réflecteur 24, 25 est disposé de sorte à s'interposer entre le revêtement réfléchissant et la face arrière des modules photovoltaïques bifaciaux 4, 5 du dispositif 1 de mesure. Ainsi, le réflecteur 24, 25 permet de s'affranchir des variations de réflexion du revêtement réfléchissant, ces variations pouvant par exemple provenir d'une accumulation de salissures ou d'une présence d'eau sur ce revêtement réfléchissant.

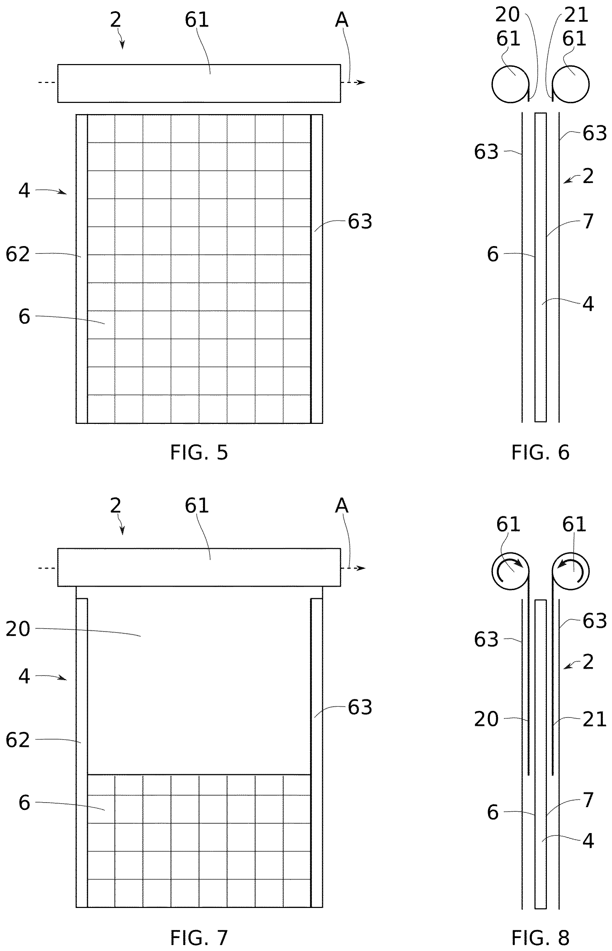

Sur les figures 5 à 9, on a représenté un mode de réalisation des écrans 20 à 23. Dans ce mode de réalisation, au moins un écran 20 à 23, de préférence chaque écran 20 à 23, est configuré pour être animé en rotation autour d'un axe A parallèle à la face 6 à 9 à laquelle il est associé. Chaque écran 20 à 23 peut être un volet roulant. Les volets roulants peuvent comprendre une pluralité de lattes adjacentes ou peuvent être des toiles pliables. Dans ce mode de réalisation, les unités 2, 3 peuvent comporter des caissons 61 positionnés au-dessus des modules photovoltaïques bifaciaux 4, 5 de façon à ne pas générer d'ombrage sur les modules 4, 5. Chaque caisson 61 est configuré pour loger un écran 20 à 23 dans la position rétractée. Par exemple, les caissons 61 d'une unité 2, 3 s'étendent sur toute la largeur du ou des modules 4, 5 de l'unité 2, 3. Un caisson 61 peut comprendre un moteur apte à entraîner un écran 20 à 23 en rotation autour de l'axe A. Un caisson 61 peut en outre comprendre des capteurs de fin de course pour stopper le fonctionnement du moteur lorsque l'écran 20 à 23 et entièrement enroulés ou déroulés, c'est-à-dire entièrement rétractée ou déployée. Le châssis 40,41 peut également comporter des rails de guidage 62 63 s'étendant le long des faces 6 à 9 des modules photovoltaïques bifaciaux 4, 5. Les rails de guidage 62,63 sont positionnés de part et d'autre des modules 4, 5 de l'unité 2, 3 de façon à ne pas générer d'ombre sur les modules photovoltaïques bifaciaux 4, 5. Ces rails de guidage 62,63 permettent de guider et maintenir l'écran 23 tendu dans un plan comprenant l'axe A. Avantageusement, les rails de guidage 62 63 sont opaques au rayonnement solaire 14,15 pour l'empêcher de passer par les côtés de l'unité 2, 3. En particulier, sur les figures 5 et 6 les écrans 20,21 de la première unité 2 sont dans la position rétractée, et sur les figures 7 et 8, les écrans 20, 21 sont en déploiement, c'est-à-dire partiellement déployés, le long des faces 6, 7 du module photovoltaïque 4 de la première unité 2.

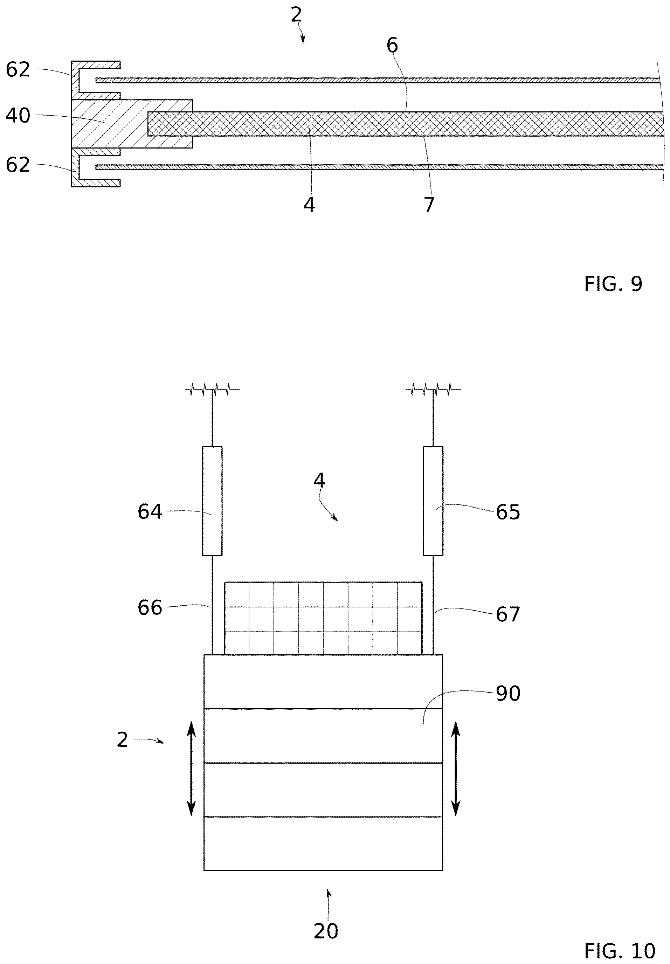

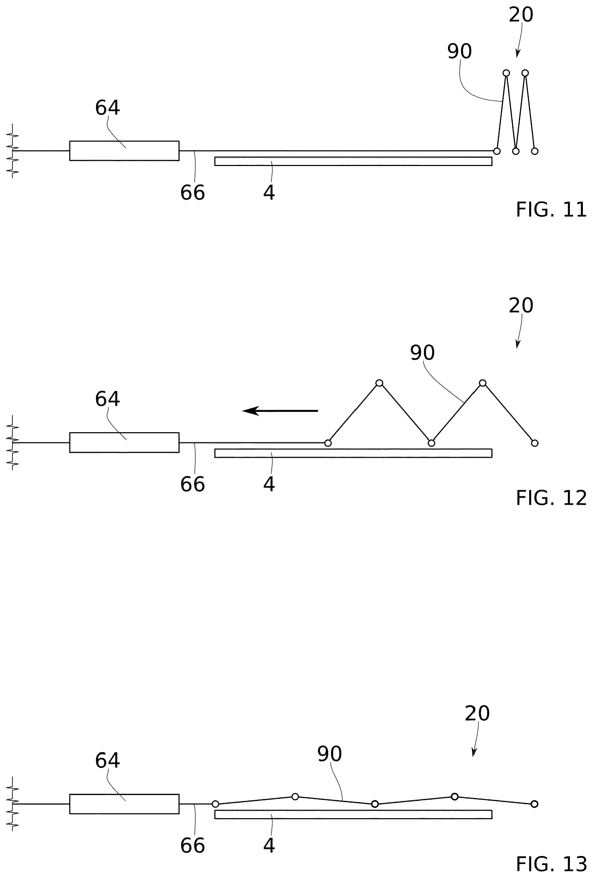

Sur les figures 10 à 13, on a représenté un autre mode de réalisation des écrans 20 à 23. Dans cet autre mode de réalisation au moins un écran 20 à 23, de préférence chaque écran 20 à 23, est configuré pour être animé en translation le long d'une face 6 à 9 à laquelle il est associé. Par exemple, chaque écran 20 à 23 peut comprendre des lames 90 qui se replient les unes sur les autres. C'est-à-dire que chaque lame 90 est articulée sur ses deux bords opposés avec une autre lame 90 adjacente. Dans ce cas, une unité 2, 3 peut comprendre deux vérins 64, 65 configurés pour déployer et rétracter deux tiges 66, 67. Les tiges 66, 67 étant fixées à leurs extrémités à une lame 90 d'un écran 20 à 23. Sur la figure 11, on a représenté un écran 20 dans une position rétractée, aux figures 10 et 12 on a représenté l'écran 20 en déploiement, et sur la figure 13 on a représenté l'écran 20 dans la position déployée.

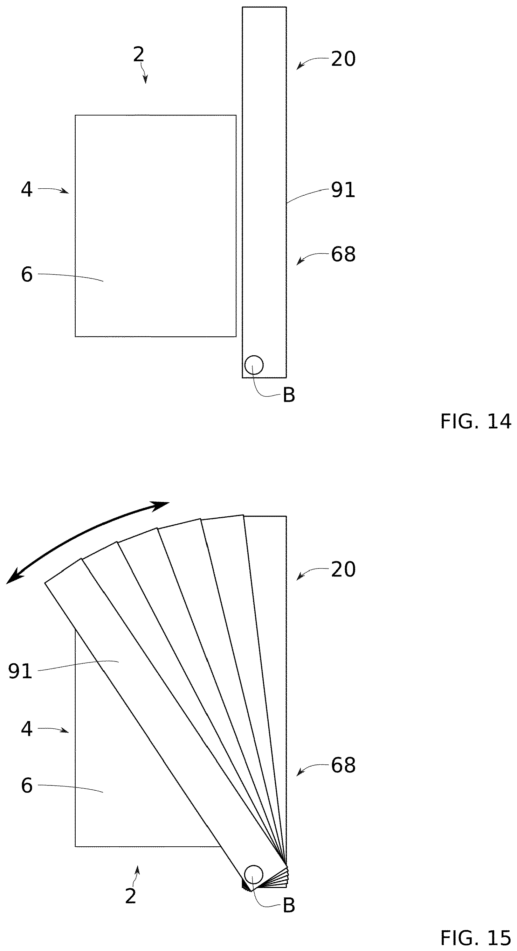

Sur les figures 14 et 15, on a représenté encore un autre mode de réalisation des écrans 20 à 23. Dans ce cas, au moins un écran 20 à 23, de préférence chaque écran 20 à 23, est configuré pour être animé en rotation autour d'un axe B perpendiculaire à la face 6 à 9 à laquelle il est associé. L'écran 20 à 23 peut être un éventail 68. L'éventail 68 comprend plusieurs lames 91 raccordées, chacune, par une extrémité à un axe d'entraînement d'un moteur. Le moteur, lorsqu'il fonctionne, anime l'axe d'entrainement en rotation autour de l'axe B pour déployer et replier les lames 91 de l'éventail 68. Sur la figure 14, l'écran 20 est dans la position rétractée et sur la figure 15, l'écran 20 est en déploiement.

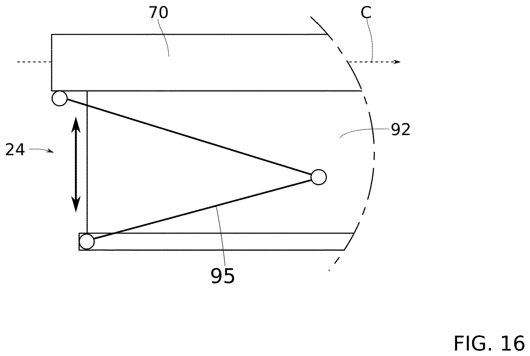

Sur la figure 16, on a représenté un mode de réalisation d'un réflecteur 24,25. De manière générale, un réflecteur 24,25 réfléchit le rayonnement solaire 14,15. Par exemple, un réflecteur 24, 25 peut être une toile 92. La toile 92 peut comprendre un film souple avec un revêtement réfléchissant. De préférence, le réflecteur 24 a un albédo supérieur ou égal à 0,8. En variante, la toile 92 peut comprendre une ou plusieurs couches, par exemple une couche en aluminium. Un réflecteur 24,25 peut-être configuré pour être animé en rotation autour d'un axe C parallèle au sol 16. Par exemple, un réflecteur 24, 25 peut être un film enroulable. Le dispositif 1 de mesure peut comprendre un boîtier 70 pour loger le réflecteur 24,25 dans la position rétractée. Le boîtier 70 peut être monté sur le support 50 ou être posé sur le sol 16. Par exemple, le boîtier 70 peut être monté sur le support 50, à une hauteur inférieure à 1 m du sol 16. Cette hauteur permet de couvrir au mieux la partie 17 du sol 16 et d'éviter ainsi des rayons réfléchis par le sol lorsque le réflecteur 24,25 et dans la position déployée. Le boîtier 70 peut comprendre un moteur configuré pour entraîner le réflecteur 24,25 en rotation autour de l'axe C. Le boîtier 70 peut également comporter des capteurs de fin de course permettant de stopper le fonctionnement du moteur quand le réflecteur 24, 25 est entièrement enroulé ou déroulé, c'est-à-dire rétractée ou déployée. Dans un mode de réalisation, le boîtier 70 peut comprendre des guides s'étendant perpendiculairement à l'axe C, afin de guider le déploiement du réflecteur 24,25. En variante, le boîtier 70 peut comprendre des bras articulés 95 configurés pour guider et maintenir le réflecteur 24,25 tendus dans un plan comprenant l'axe C. Lorsque le moteur du boîtier 70 fonctionne pour déployer le réflecteur 24,25, les bras articulés 95 sont mis en mouvement et le réflecteur 24, 25 se déroule autour de l'axe C. De préférence, la longueur totale des bras articulés 95 est au moins égale à la longueur du réflecteur 24,25 dans la position déployée. On peut également prévoir un dispositif de poulie et d'engrenages reliant le moteur du boîtier 70 aux bras articulés 95. De cette manière, lorsque le moteur fonctionne, il entraîne le déploiement du réflecteur 24,25 ainsi que le dispositif de poulie et d'engrenages pour déployer les bras articulés 95 simultanément. Sur la figure 16, on a représenté une vue de dessus du réflecteur 24,25 en cours de déploiement. Sur la figure 3, on a représenté le réflecteur 24 dans la position rétractée et sur la figure 4 le réflecteur 24 dans la position déployée.

Avantageusement, le dispositif 1 de mesure comporte une unité de commande électronique 80 configurée pour commander un déploiement et un déplacement vers la position rétractée de chacun des écrans 20 à 23 et de chaque réflecteur 24,25. L'unité de commande électronique 80 peut comprendre un programme d'ordinateur comprenant des instructions pour commander chacun des écrans 20 à 23 et de chaque réflecteur 24,25. L'unité de commande électronique 80 comprend un processeur ou un microprocesseur pour exécuter les instructions du programme. L'unité de commande électronique 80 comprend également des moyens pour déplacer les écrans 20 à 23 et les réflecteurs 24 ,25 en réponse à l'exécution des instructions du programme. L'unité de commande électronique 80 est couplée aux unités 2, 3, en particulier aux moteurs logés dans les caissons 61 de chacun des écrans 20 à 23, par des connexions 80,82. Par ailleurs, l'unité de commande électronique 80 peut être couplée aux boîtiers 70 logeant les réflecteurs 24,25, en particulier aux moteurs logés dans les boîtiers 70, par des connexions 83, 84.

Les différentes positions des écrans 20 à 23, et des réflecteurs 24, 25, vont permettre de pouvoir mesurer l'impact des salissures sur les faces avant et arrière des modules photovoltaïques bifaciaux 4, 5, ainsi que sur le sol 16. De façon générale, les écrans 20 à 23 viennent masquer, pendant tout ou partie de la mesure des courants fournis par les modules 4, 5, les faces avant 6, 8 ou arrière 7, 9 des modules photovoltaïques 4, 5 selon le type de mesure souhaitée.

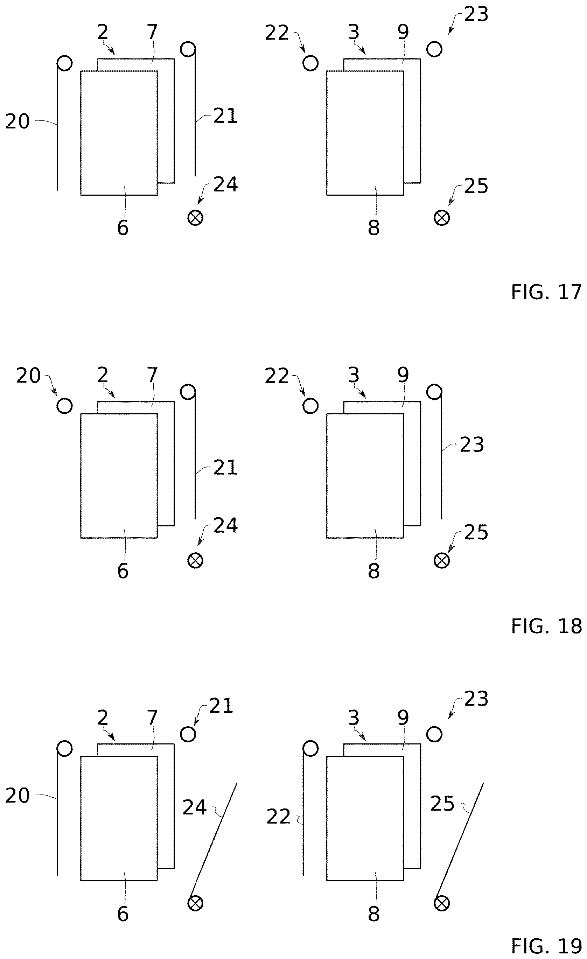

Sur les figures 17 à 23, on a représenté les principales étapes d'un procédé de mesure de production énergétique qui met en œuvre le dispositif de mesure 1 précédemment décrit. Le procédé comprend une fourniture du dispositif 1 de mesure tel que défini ci-avant. Le procédé comprend en outre une étape initiale, illustrée à la figure 17, dans laquelle on déploie les écrans 20 et 21 de la première unité 2, on rétracte les écrans 22 et 23 de la deuxième unité 3. Lorsque le dispositif 1 de mesure comprend au moins un réflecteur 24, 25, l'étape initiale peut comprendre une sous-étape dans laquelle on rétracte chaque réflecteur 24,25. Une fois l'étape initiale effectuée, on dit également que les écrans 20 à 23 et les réflecteurs 24,25 sont dans une position initiale. Dans cette position initiale, le module photovoltaïque 4 de la première unité 2 est protégé des éventuelles salissures qui pourraient se déposer sur ses faces avant et arrière 6, 7. La première unité 2 correspond à une unité dite « propre », car les faces avant 6 et arrière 7 sont protégées par les écrans associés 20,21. Dans la position initiale, les faces avant et arrière 8, 9 du module photovoltaïque 5 de la deuxième unité 3 sont exposées au rayonnement solaire 14,15 et sont donc exposées aux salissures. La deuxième unité 3 correspond à une unité dite « encrassée ». Par ailleurs, on peut noter que les réflecteurs 24,25 sont dans la position rétractée et sont donc protégés contre les salissures. Dans la position initiale, le module 4 de l'unité 2 « propre » est protégé pendant que le module 5 de l'unité 3 « encrassée » va progressivement s'encrasser. En d'autres termes, en dehors des périodes de mesure, les écrans 20 à 23 et les réflecteurs 24, 25 sont dans la position initiale.

Le procédé comprend, après l'étape initiale, une mesure principale de production énergétique, illustrée à la figure 18, dans laquelle, on rétracte l'écran 20 associé à la face avant 6 du module photovoltaïque bifacial 4 de la première unité 2, on déploie l'écran 23 associé à la face arrière 9 du module photovoltaïque bifacial 5 de la deuxième unité 2, et on mesure les courants fournis par les modules photovoltaïques bifaciaux 4,5. Dans cette configuration, on dit que les écrans 20 à 23 et les réflecteurs 24,25 sont dans une position principale. Dans cette position principale, les faces avant 6, 8 sont exposées et les faces arrière 7, 9 sont protégées. Ainsi, la mesure des courants fournis par les modules photovoltaïques bifaciaux 4, 5 des première et deuxième unités 2, 3 permet de déterminer l'impact des salissures sur la face avant 8 du module photovoltaïque 5 de la deuxième unité 3. On peut enregistrer dans une mémoire du système de mesure 10, les courants mesurés. Avantageusement, on compare les courants fournis par les première et deuxième unités 2, 3, notamment à l'aide du comparateur 13. La comparaison peut comprendre un calcul du rapport entre les deux courants fournis. La comparaison des courants fournis permet de quantifier le taux de salissures de la deuxième unité 3, à savoir l'unité « encrassée ».

Le procédé peut comprendre, après l'étape de mesure principale, une mesure secondaire de production énergétique illustrée à la figure 19. Cette mesure secondaire comprend un déplacement vers la position rétractée des écrans 21,23 associés aux faces arrière 7, 9, un déploiement des écrans 20,22 associés aux faces avant 6, 8 et une mesure des courants fournis par les modules photovoltaïques bifaciaux 4, 5. Dans cette configuration, les écrans 20 à 23 sont dans une position secondaire. Dans cette position secondaire, les faces avant 6, 8 sont protégées et les faces arrière 7, 9 sont exposées. La mesure les courants fournis par les modules photovoltaïques bifaciaux 4, 5 des première et deuxième unités 2, 3 permet de déterminer l'impact des salissures sur les faces arrière 7, 9 des modules photovoltaïques bifaciaux 4, 5. La mesure des courants permet également de déterminer l'impact des salissures sur le sol. L'étape de mesure secondaire peut en outre comprendre une comparaison des courants fournis.

Le procédé peut en outre comprendre, après l'étape de mesure principale, une mesure supplémentaire dans laquelle les écrans sont dans la position secondaire et on déploie les réflecteurs 24, 25. Ainsi, les réflecteurs 24,25 sont dans la position déployée et permettent de fournir un rayonnement solaire réfléchi 15 avec un albédo de référence similaire sur chaque face arrière 7, 9 des modules photovoltaïques bifaciaux 4, 5. Avantageusement, les réflecteurs 24,25 ont un albédo identique afin de déterminer un taux de salissures de la face arrière 9 du module photovoltaïque 5 de la deuxième unité 3 la plus précise possible. L'étape de mesure supplémentaire peut en outre comprendre une comparaison des courants fournis.

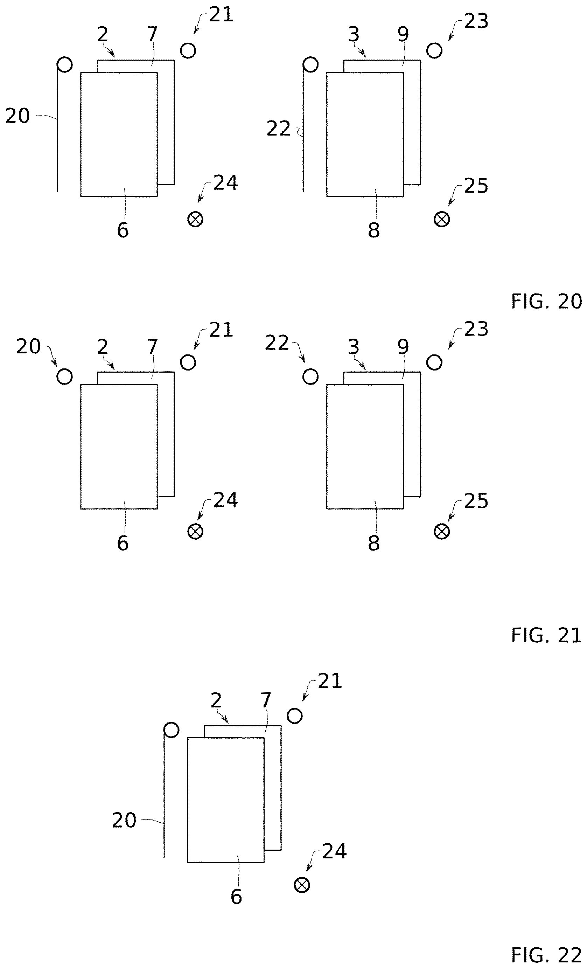

Le procédé peut en outre comprendre, après l'étape de mesure supplémentaire, une étape de mesure de l'albédo du sol 16, illustrée à la figure 20. L'étape de mesure de l'albédo du sol 16 comprend un déplacement vers la position rétractée des réflecteurs 24, 25, et une mesure des courants fournis par les modules photovoltaïques bifaciaux 4, 5. Ainsi, les faces arrière 7, 9 sont exposées au rayonnement solaire réfléchi 15 provenant du sol 16. Avec le temps, le sol 16 peut s'encrasser et son albédo peut se modifier. L'étape de mesure de l'albédo du sol 16 permet de quantifier un taux de salissures du sol 16. L'étape de mesure de l'albédo du sol 16 comprend, de préférence, une comparaison des courants mesurés lors de la mesure supplémentaire avec les courants mesurés lors de la mesure de l'albédo du sol 16.

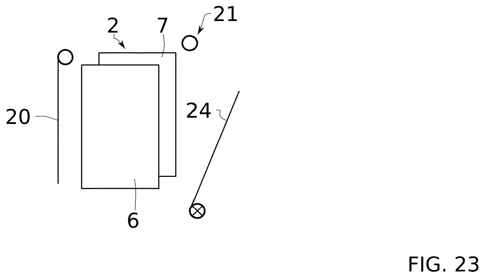

Le procédé peut également comprendre une autre mesure de l'albédo du sol 16, appelé également mesure additionnelle de production énergétique. De préférence, l'étape de mesure additionnelle, illustrée aux figures 22 et 23, est effectuée après l'étape initiale. L'étape de mesure additionnelle comprend un déplacement vers la position rétractée de l'écran 21 associé à la face arrière 7 du module photovoltaïque bifacial 4 de la première unité 2, et une mesure d'un premier courant fourni par le module photovoltaïque bifacial 4 de la première unité 2. Puis, on déploie le réflecteur 24 associé à la face arrière 7 du module photovoltaïque bifacial 4 de la première unité 2 et on mesure un deuxième courant fourni par le module photovoltaïque bifacial 4 de la première unité 2. Avantageusement, on compare le deuxième courant mesuré avec le premier courant mesuré pour déterminer un taux de salissures du sol 16.

Selon encore un autre avantage, le procédé comprend une mesure globale de production énergétique, illustrée à la figure 21. La mesure globale comprend un déplacement vers la position rétractée des écrans 20 à 23 et des réflecteurs 24,25, et une mesure des courants fournis par les modules photovoltaïques bifaciaux 4, 5 des première et deuxième unités 2, 3. La mesure globale peut comprendre une comparaison des courants fournis pour déterminer un taux de salissures général du module photovoltaïque bifacial 5 de la deuxième unité 3 et du sol 16.

Le procédé qui vient d'être décrit présente l'avantage de manipuler, c'est-à-dire replier ou déployer les écrans 20 à 23 et les réflecteurs 24, 25, dans un temps suffisamment court pour récupérer les valeurs des courants mesurées tout en limitant un encrassement éventuel du module 4 de la première unité 2, à savoir l'unité « propre ».

L'invention n'est pas limitée aux modes de réalisations précédemment décrits.

## Revendications

1. Dispositif de mesure de production énergétique photovoltaïque, comprenant des première et deuxième unités (2, 3), chaque unité (2, 3) comprenant au moins un module photovoltaïque bifacial (4, 5), chaque module photovoltaïque bifacial (4, 5) ayant une face avant (6, 8) et une face arrière (7, 9), le dispositif de mesure comprenant un système de mesure (10) des courants fournis par les modules photovoltaïque bifaciaux (4, 5), **caractérisé en ce que** chaque unité (2, 3) comporte deux écrans (20 à 23) associés respectivement à la face avant (6, 8) et à la face arrière (7, 9) dudit au moins un module photovoltaïque bifacial (4, 5) de l'unité (2, 3), chaque écran (20 à 23) étant mobile entre une position déployée où l'écran (20 à 23) masque sa face associée (6 à 9) et une position rétractée où sa face associée (6 à 9) est exposée à un rayonnement solaire (14, 15).

2. Dispositif de mesure selon la revendication 1, comprenant au moins un réflecteur (24, 25) associé à au moins une face arrière (7, 9), ledit au moins un réflecteur (24, 25) étant mobile entre une position déployée où ledit au moins un réflecteur (24, 25) réfléchit un rayonnement solaire (15) vers ladite au moins une face arrière (7, 9) à laquelle il est associé et masque une partie du sol (17), et une position rétractée où la partie du sol (17) est exposée au rayonnement solaire (14).

3. Dispositif de mesure selon l'une des revendications 1 à 2, dans lequel au moins un écran (20 à 23) est configuré pour être animé en rotation autour d'un axe (A) parallèle à sa face associée (6 à 9) de sorte à translater en regard de sa face associée (6 à 9) pour sélectivement passer de sa position déployée à sa position rétractée.

4. Dispositif de mesure selon l'une des revendications 1 à 3, dans lequel au moins un écran (20 à 23) est configuré pour être animé en translation le long de sa face associée (6 à 9) pour sélectivement passer de sa position déployée à sa position rétractée.

5. Dispositif de mesure selon la revendication 4, dans lequel ledit au moins un écran (20 à 23) comprend des lames articulées configurées pour être placées en regard les unes aux autres dans sa position rétractée.

6. Dispositif de mesure selon l'une quelconque des revendications 1 à 5, dans lequel au moins un module photovoltaïque bifacial (4, 5) comporte un ensemble multicouches muni d'une couche de cellules photovoltaïques bifaciales.

7. Dispositif de mesure selon l'une quelconque des revendications 1 à 5, dans lequel au moins un module photovoltaïque bifacial (4, 5) comporte des premier et deuxième ensembles multicouches munis, chacun, d'une couche de cellules photovoltaïques mono-faciales.

8. Centrale photovoltaïque comprenant une pluralité d'unités de production, chaque unité de production comprenant au moins un module photovoltaïque bifacial, dit de production, destiné à produire de l'électricité, la centrale photovoltaïque comprenant au moins un dispositif de mesure selon l'une quelconque des revendications 1 à 7.

9. Procédé de mesure de production énergétique photovoltaïque utilisant un dispositif de mesure selon l'une des revendications 1 à 7, **caractérisé en ce qu'**il comporte une étape initiale dans laquelle on déploie les deux écrans (20, 21) de la première unité (2) du dispositif de mesure, et on rétracte les deux écrans (22, 23) de la deuxième unité (3) du dispositif de mesure.

10. Procédé de mesure selon la revendication 9, comprenant, après l'étape initiale, une mesure principale de production énergétique, dans laquelle on rétracte l'écran (20) associé à la face avant (6) dudit au moins un module photovoltaïque bifacial (4) de la première unité (2) du dispositif de mesure, on déploie l'écran (23) associé à la face arrière (9) dudit au moins un module photovoltaïque bifacial (5) de la deuxième unité (3) du dispositif de mesure, et on mesure les courants fournis par les modules photovoltaïques bifaciaux (4, 5).

11. Procédé de mesure selon la revendication 10, comprenant, après l'étape de mesure principale, une mesure secondaire de production énergétique, dans laquelle on rétracte les écrans (21, 23) associés aux faces arrière (7, 9), on déploie les écrans (20, 22) associés aux faces avant (6, 8), et on mesure les courants fournis par les modules photovoltaïques bifaciaux (4, 5).

12. Procédé de mesure selon l'une des revendications 9 à 11, dans lequel le dispositif de mesure comporte au moins un réflecteur (24, 25) et l'étape initiale comporte une sous-étape dans laquelle on rétracte ledit au moins un réflecteur (24, 25).

13. Procédé de mesure selon la revendication 12, comprenant, après l'étape de mesure principale, une mesure supplémentaire de production énergétique, dans laquelle on rétracte les écrans (21, 23) associés aux faces arrière (7, 9), on déploie les écrans (20, 22) associés aux faces avant (6, 8), on déploie ledit au moins un réflecteur (24, 25) et on mesure les courants fournis par les modules photovoltaïques bifaciaux (4, 5).

14. Procédé de mesure selon la revendication 12 ou 13, comprenant, après l'étape initiale, une mesure additionnelle de production énergétique, dans laquelle on rétracte l'écran (21) associé à la face arrière (7) dudit au moins un module photovoltaïque bifacial (4) de la première unité (2) du dispositif de mesure, on mesure un premier courant fourni par ledit au moins un module photovoltaïque bifacial (4) de la première unité (2) du dispositif de mesure, on déploie ledit au moins un réflecteur (24, 25), et on mesure un deuxième courant fourni par ledit au moins un module photovoltaïque bifacial (4) de la première unité (2) du dispositif de mesure.

15. Produit programme d'ordinateur comprenant des instructions qui, lorsqu'elles sont exécutées par une unité de commande électronique (80), permettent à l'unité de commande électronique (80) d'effectuer les étapes du procédé de mesure selon l'une quelconque des revendications 9 à 14.

## Patentansprüche

1. Vorrichtung zur Messung der fotovoltaischen Energieerzeugung, die eine erste und eine zweite Einheit (2, 3) umfasst, wobei jede Einheit (2, 3) mindestens ein bifaziales fotovoltaisches Modul (4, 5) umfasst, wobei jedes bifaziale fotovoltaische Modul (4, 5) eine Vorderfläche (6, 8) und eine Rückseitenfläche (7, 9) aufweist, wobei die Vorrichtung zur Messung ein Messsystem (10) der Ströme umfasst, die von den bifazialen fotovoltaischen Modulen (4, 5) geliefert werden, **dadurch gekennzeichnet, dass** jede Einheit (2, 3) zwei Blenden (20 bis 23) umfasst, die jeweils der Vorderfläche (6, 8) und der Rückseitenfläche (7, 9) des mindestens einen bifazialen fotovoltaischen Moduls (4, 5) der Einheit (2, 3) zugeordnet sind, wobei jede Blende (20 bis 23) zwischen einer ausgefahrenen Position, in der die Blende (20 bis 23) ihre zugeordnete Fläche (6 bis 9) abdeckt, und einer eingefahrenen Position, in der ihre zugeordnete Fläche (6 bis 9) einer Sonneneinstrahlung (14, 15) ausgesetzt ist, beweglich ist.

2. Vorrichtung zur Messung nach Anspruch 1, die mindestens einen Reflektor (24, 25) umfasst, der mindestens einer Rückseitenfläche (7, 9) zugeordnet ist, wobei der mindestens eine Reflektor (24, 25) zwischen einer ausgefahrenen Position, in der der mindestens eine Reflektor (24, 25 eine Sonneneinstrahlung (15) zu der mindestens einen Rückseitenfläche (7, 9), der er zugeordnet ist, reflektiert und einen Teil des Bodens (17) abdeckt, und einer eingefahrenen Position, in der der Teil des Bodens (17) der Sonneneinstrahlung (14) ausgesetzt ist, beweglich ist.

3. Vorrichtung zur Messung nach einem der Ansprüche 1 bis 2, wobei mindestens eine Blende (20 bis 23) dazu konfiguriert ist, in Drehung um eine Achse (A) parallel zu ihrer zugeordneten Fläche (6 bis 9) derart angetrieben zu werden, dass sie gegenüber ihrer zugeordneten Fläche (6 bis 9) verschoben wird, um selektiv von ihrer ausgefahrenen Position zu ihrer eingefahrenen Position überzugehen.

4. Vorrichtung zur Messung nach einem der Ansprüche 1 bis 3, wobei mindestens eine Blende (20 bis 23) dazu konfiguriert ist, in Verschiebung entlang ihrer zugeordneten Fläche (6 bis 9) angetrieben zu werden, um selektiv von ihrer ausgefahrenen Position zu ihrer eingefahrenen Position überzugehen.

5. Vorrichtung zur Messung nach Anspruch 4, wobei die mindestens eine Blende (20 bis 23) gelenkige Lamellen umfasst, die dazu konfiguriert sind, in ihrer eingefahrenen Position einander gegenüber platziert zu sein.

6. Vorrichtung zur Messung nach einem der Ansprüche 1 bis 5, wobei das mindestens eine bifaziale fotovoltaische Modul (4, 5) eine Mehrschichtenanordnung umfasst, die mit einer Schicht bifazialer fotovoltaischer Zellen versehen ist.

7. Vorrichtung zur Messung nach einem der Ansprüche 1 bis 5, wobei das mindestens eine bifaziale fotovoltaische Modul (4, 5) eine erste und eine zweite Mehrschichtenanordnung umfasst, die jeweils mit einer Schicht monofazialer fotovoltaischer Zellen versehen sind.

8. Fotovoltaikanlage, die eine Vielzahl von Produktionseinheiten umfasst, wobei jede Produktionseinheit mindestens ein bifaziales fotovoltaisches Modul umfasst, als Produktionsmodul bezeichnet, das dazu bestimmt ist, Elektrizität zu erzeugen, wobei die Fotovoltaikanlage mindestens eine Vorrichtung zur Messung nach einem der Ansprüche 1 bis 7 umfasst.

9. Verfahren zur Messung fotovoltaischer Energieerzeugung unter Verwendung einer Vorrichtung zur Messung nach einem der Ansprüche 1 bis 7, **dadurch gekennzeichnet, dass** es einen anfänglichen Schritt umfasst, bei dem die beiden Blenden (20, 21) der ersten Einheit (2) der Vorrichtung zur Messung ausgefahren werden, und die beiden Blenden (22, 23) der zweiten Einheit (3) der Vorrichtung zur Messung eingefahren werden.

10. Verfahren zur Messung nach Anspruch 9, das nach dem anfänglichen Schritt eine Energieerzeugungshauptmessung umfasst, bei der die Blende (20), die der Vorderfläche (6) des mindestens einen bifazialen fotovoltaischen Moduls (4), die der ersten Einheit (2) der Vorrichtung zur Messung zugeordnet ist, eingefahren wird, die Blende (23), die der Rückseitenfläche (9) des mindestens einen bifazialen fotovoltaischen Moduls (5) der zweiten Einheit (3) der Vorrichtung zur Messung zugeordnet ist, ausgefahren wird und die von den bifazialen fotovoltaischen Modulen (4, 5) gelieferten Ströme gemessen werden.

11. Verfahren zur Messung nach Anspruch 10, das nach dem Hauptmessschritt eine sekundäre Energieerzeugungsmessung umfasst, wobei die Blenden (21, 23), die den Rückseitenflächen (7, 9) zugeordnet sind, eingefahren werden, die Blenden (20, 22), die den Vorderflächen (6, 8) zugeordnet sind, ausgefahren werden und die von den bifazialen fotovoltaischen Modulen (4, 5) gelieferten Ströme gemessen werden.

12. Verfahren zur Messung nach einem der Ansprüche 9 bis 11, wobei die Messvorrichtung mindestens einen Reflektor (24, 25) umfasst, und der anfängliche Schritt einen Teilschritt umfasst, bei dem der mindestens eine Reflektor (24, 25) eingefahren wird.

13. Verfahren zur Messung nach Anspruch 12, das nach dem Hauptmessschritt eine supplementäre Energieerzeugungsmessung umfasst, wobei die Blenden (21, 23), die den Rückseitenflächen (7, 9) zugeordnet sind, eingefahren werden, die Blenden (20, 22), die den Vorderflächen (6, 8) zugeordnet sind, ausgefahren werden, der mindestens eine Reflektor (24, 25) ausgefahren wird und die von den bifazialen fotovoltaischen Modulen (4, 5) gelieferten Ströme gemessen werden.

14. Verfahren zur Messung nach einem der Ansprüche 12 oder 13, das nach dem anfänglichen Schritt eine additionale Energieerzeugungsmessung umfasst, wobei die Blende (21), die der Rückseitenfläche (7) des mindestens einen bifazialen fotovoltaischen Moduls (4) der ersten Einheit (2) der Vorrichtung zur Messung zugeordnet ist, eingefahren wird, ein erster Strom, der von dem mindestens einen bifazialen fotovoltaischen Modul (4) der ersten Einheit (2) der Vorrichtung zur Messung geliefert wird, misst, der mindestens eine Reflektor (24, 25) ausgefahren wird, und ein zweiter Strom, der von dem mindestens einen bifazialen fotovoltaischen Modul (4) der ersten Einheit (2) der Vorrichtung zur Messung geliefert wird, gemessen wird.

15. Computerprogrammprodukt, das Anweisungen umfasst, die, wenn sie von einer elektronischen Steuereinheit (80) ausgeführt werden, es der elektronischen Steuereinheit (80) erlauben, die Schritte des Verfahrens zur Messung nach einem der Ansprüche 9 bis 14 durchzuführen.

## Claims

1. Device for measuring photovoltaic energy production, comprising first and second units (2, 3), each unit (2, 3) comprising at least one bifacial photovoltaic module (4, 5), each bifacial photovoltaic module (4, 5) having a front face (6, 8) and a rear face (7, 9), the measuring device comprising a system (10) for measuring currents supplied by the bifacial photovoltaic modules (4, 5), **characterised in that** each unit (2, 3) comprises two screens (20 to 23), associated respectively with the front face (6, 8) and with the rear face (7, 9) of said at least one bifacial photovoltaic module (4, 5) of the unit (2, 3), each screen (20 to 23) being movable between a deployed position, where the screen (20 to 23) masks its associated face (6 to 9) and a retracted position where its associated face (6 to 9) is exposed to a solar radiation (14, 15).

2. Measuring device according to claim 1, comprising at least one reflector (24, 25) associated with at least one rear face (7, 9), said at least one reflector (24, 25) being movable between a deployed position, where said at least one reflector (24, 25) reflects a solar radiation (15) to said at least one rear face (7, 9) to which a part of the ground (17) is associated and masks, and a retracted position, where the part of the ground (17) is exposed to the solar radiation (14).

3. Measuring device according to any one of claims 1 to 2, wherein at least one screen (20 to 23) is configured to be rotated about an axis (A) parallel to its associated face (6 to 9), so as to translate facing its associated face (6 to 9) to selectively pass from its deployed position to its retracted position.

4. Measuring device according to any one of claims 1 to 3, wherein at least one screen (20 to 23) is configured to be translated along its associated face (6 to 9) to selectively pass from its deployed position to its retracted position.

5. Measuring device according to claim 4, wherein said at least one screen (20 to 23) comprises articulated strips configured to be placed facing one another in its retracted position.

6. Measuring device according to any one of claims 1 to 5, wherein at least one bifacial photovoltaic module (4, 5) comprises a multilayer assembly provided with a layer of bifacial photovoltaic cells.

7. Measuring device according to any one of claims 1 to 5, wherein at least one bifacial photovoltaic module (4, 5) comprises first and second multilayer assemblies, each provided with a layer of mono-facial photovoltaic cells.

8. Photovoltaic unit comprising a plurality of production units, each production unit comprising at least one bifacial photovoltaic module, called production, intended to produce electricity, the photovoltaic unit comprising at least one measuring device according to any one of claims 1 to 7.

9. Method for measuring photovoltaic energy production using a measuring device according to any one of claims 1 to 7, **characterised in that** it comprises an initial step, in which the two screens (20, 21) of the first unit (2) of the measuring device are deployed, and the two screens (22, 23) of the second unit (3) of the measuring device are retracted.

10. Measuring method according to claim 9, comprising, after the initial step, a main measurement of energy production, in which the screen (20) associated with the front face (6) of said at least one bifacial photovoltaic module (4) of the first unit (2) of the measuring device is retracted, the screen (23) associated with the rear face (9) of said at least one bifacial photovoltaic module (5) of the second unit (3) of the measuring device is deployed, and the currents supplied by the bifacial photovoltaic modules (4, 5) are measured.

11. Measuring method according to claim 10, comprising, after the main measuring step, a secondary measurement of energy production, in which the screens (21, 23) associated with the rear faces (7, 9) are retracted, the screens (20, 22) associated with the front faces (6, 8) are deployed, and the currents supplied by the bifacial photovoltaic modules (4, 5) are measured.

12. Measuring method according to any one of claims 9 to 11, wherein the measuring device comprises at least one reflector (24, 25), and the initial step comprises a substep, in which said at least one reflector (24, 25) is retracted.

13. Measuring method according to claim 12, comprising, after the main measuring step, an additional measurement of energy production, in which the screens (21, 23) associated with the rear faces (7, 9) are retracted, the screens (20, 22) associated with the front faces (6, 8) are deployed, said at least one reflector (24, 25) is deployed and the currents supplied by the bifacial photovoltaic modules (4, 5) are measured.

14. Measuring method according to claim 12 or 13, comprising, after the initial step, an additional measurement of energy production, in which the screen (21) associated with the rear face (7) of said at least one bifacial photovoltaic module (4) of the first unit (2) of the measuring device is retracted, a first current supplied by said at least one bifacial photovoltaic module (4) of the first unit (2) of the measuring device is measured, said at least one reflector (24, 25) is deployed, and a second current supplied by said at least one bifacial photovoltaic module (4) of the first unit (2) of the measuring device is measured.

15. Computer program product comprising instructions which, when they are executed by an electronic control unit (80), enable the electronic control unit (80) to carry out the steps of the measuring method according to any one of claims 9 to 14.
